# EUROPEAN PATENT SPECIFICATION

(11) **EP 3 906 368 B1**
(45) Date of publication and mention of the grant of the patent: **15.11.2023**
(21) Application number: 19839438.9
(22) Date of filing: 24.12.2019
(51) Int. Cl.: F16H 9/18, F16H 57/02, F16H 57/035, F16H 63/06

(54) **CONTINUOUSLY VARIABLE TRANSMISSION, PROPULSION UNIT AND MOTOR VEHICLE COMPRISING SAID TRANSMISSION**
STUFENLOSES GETRIEBE, ANTRIEBSEINHEIT UND KRAFTFAHRZEUG MIT DIESEM GETRIEBE
TRANSMISSION VARIABLE EN CONTINU, UNITÉ DE PROPULSION ET VÉHICULE À MOTEUR COMPRENANT LADITE TRANSMISSION

(30) Priority: 31.12.2018 IT 201800021502
(43) Date of publication of application: 10.11.2021
(73) Proprietor: PIAGGIO & C. S.p.A., 56025 Pontedera (Pisa) (IT)
(72) Inventor: NUTI, Luca, 56025 Pontedera (PI) (IT); MARIOTTI, Walter, 56025 Pontedera (PI) (IT)
(74) Representative: Mannucci, Michele
(86) International application number: PCT/IB2019/061337
(87) International publication number: WO 2020/141413

(56) References cited:
- WO-A1-2004/057215
- WO-A1-2013/090068
- DE-A1-102015 203 913
- DE-A1-102015 214 842

## Description

### TECHNICAL FIELD

The present invention relates to improvements to transmissions for motor vehicles. More in particular, the present invention relates to improvements to the so-called continuously variable transmissions.

### BACKGROUND TO THE INVENTION

In the field of motor vehicles, especially in the field of motor vehicles such as motor scooters, and in the field of saddle vehicles in general, continuously variable transmissions are often used. A continuously variable transmission is a mechanical assembly allowing changing seamlessly the gear ratio between an input shaft (drive shaft) and an output shaft (driven shaft) between a maximum and a minimum value.

Many continuously variable transmissions have been developed in the art, based on different principles. In the motor vehicle field, widely used are the continuously variable transmissions using a pair of pulleys with a V-shaped groove, joint together by means of a drive belt, whose cross-section is V-shaped. Each of the two transmission pulleys, i.e. the drive pulley and the driven pulley, is formed by a pair of half-pulleys of variable distance. Each pulley is typically mounted on a shaft; a half-pulley is axially fixed relative to the shaft, the other half-pulley is movable. Thanks to the reciprocal movement of the two half-pulleys, the axial dimension, i.e. the width of the groove of each pulley, changes. Thus, the drive belt moves towards or away from the rotation axis of the respective pulley. The axial dimension of the grooves of the two pulleys changes reversely, i.e. when the groove of a pulley increases in size, the groove of the other pulley decreases, and vice versa. In this way, the ratio between the average radii of the contact surfaces between the sides of the half-pulleys and the V-shaped belt changes, with a consequent change in gear ratio.

Over the time, many different types of continuously variable transmissions have been developed; in many of them, an actuator acts on a pulley to change the axial distance between the half-pulleys, and thus the axial dimension of the groove. The axial dimension of the groove of the other pulley changes passively, due to the effect of the displacement of the drive belt. Examples of continuously variable transmissions of this type are disclosed in US 9.797.485; US 7.905.803; US 2012/0100944; EP 2039601; EP 2765337; EP 2048411. A transmission according to the preamble of claim 1 is disclosed in DE102015214842. Further continuously variable transmissions are disclosed in DE102015203913, WO2004/057215 and WO2013/090068.

One of the critical aspects of these transmissions is the connection between the actuator controlling the gear ratio and the movable part of the pulley. There is therefore a continuous search for more effective systems for transmitting motion from the actuator to the movable half-pulley.

### SUMMARY OF THE INVENTION

According to the invention, a continuous variable transmission according to claim 1 is provided.

Advantageous embodiments of the invention are laid down in the dependent claims.

According to the invention, a continuously variable transmission is provided, comprising a first pulley mounted on a first shaft and comprising a V-shaped groove of variable size to house a drive belt. The transmission further comprises a second pulley mounted on a second shaft and having a V-shaped groove for the drive belt. Each of said first pulley and second pulley comprises an axially fixed half-pulley and a half-pulley axially movable relative to the first shaft and the second shaft respectively. An actuator is also provided, associated with the first pulley and adapted to control the axial movement of the movable half-pulley relative to the fixed half-pulley of the first pulley. The first pulley may be a drive pulley and the second pulley may be a driven pulley, or vice versa. The actuator is connected to the movable half-pulley by means of a mechanical connection device axially extending through the fixed half-pulley. The mechanical connection device comprises a variable length member including a first hollow threaded member and a second threaded member, screwed together and coaxial with the first shaft. The first hollow threaded member is adapted to be rotated by the actuator relative to the second threaded member, that is prevented from rotating, so that the rotation of a threaded member relative to the other causes the lengthening and/or shortening of the mechanical member constituted by the two threaded members. The second threaded member is axially constraint to the movable half-pulley. The first hollow threaded member comprises an inner housing for a support bearing, with which the first hollow threaded member is rotatably supported on the first shaft. On the outer surface of the first hollow threaded member an outer threading is provided which engages an inner threading of the second threaded member. The second threaded member comprises a seat for a support bearing, with which the second threaded member is axially constraint to the movable half-pulley and supported so that the movable half-pulley may freely rotate relative to the second threaded member.

Preferably, the support bearing housed in the first hollow threaded member is provided at the level of the outer threading, so that the outer threading surrounds the support bearing housed in the first hollow threaded member.

Preferably, the seat for the support bearing of the second threaded member is provided at a first end of the second threaded member, opposite to a second end, close to which the inner threading is provided.

A propulsion unit is also disclosed, comprising a power source, in particular a combustion engine, and a transmission of the type illustrated above and detailed below.

Furthermore, a motor vehicle is disclosed, in particular a motorcycle with two, three or four wheels, with a propulsion unit having a power source and a transmission of the type defined above.

### BRIEF DESCRIPTION OF THE DRAWING

The invention will be better understood by following the description below and the attached drawing, showing a non-limiting embodiment of the invention. More specifically, in the drawing:
Fig. 1 is a schematic side view of a motor scooter, on which a motor-transmission unit is mounted comprising a continuously variable transmission according to the present invention;
Fig. 2 is an axonometric view of a unit comprising a motor and a continuously variable transmission according to the present invention;
Fig. 3 is a cross-sectional axonometric view of the continuously variable transmission, showing the arrangement of the main members thereof;
Figs. 4 and 5 are views and partial cross-sections, according to planes containing the axis of the drive shaft, of a drive pulley of the continuously variable transmission according to the invention;
Fig. 6 is an axonometric view of the drive pulley and of the mechanical connection device between actuator and movable half-pulley;
Fig. 7 is the view of Fig. 6 with cross-cut parts;
Fig. 8 is an axonometric cross-section of the actuator for changing the gear ratio;
Fig. 9 is an axonometric view of the primary fixed half-pulley;
Fig. 10 is an axonometric cross-section of the half-pulley of Fig. 9;
Fig. 11 is an axonometric view of the primary movable half-pulley;
Fig. 12 is an axonometric cross-section of the half-pulley of Fig. 11;
Figs. 13 and 14 are respectively an axonometric view and an axonometric cross-section of a component for torsionally coupling the movable half-pulley and the drive shaft;
Figs. 15 and 16 are respectively an axonometric view and an axonometric cross-section of a first screw member of the mechanical connection device for the connection between the actuator and the movable half-pulley;
Figs. 17 and 18 are respectively an axonometric view and an axonometric cross-section of a second screw member of the mechanical connection device for the connection between the actuator and the movable half-pulley.

### DETAILED DESCRIPTION

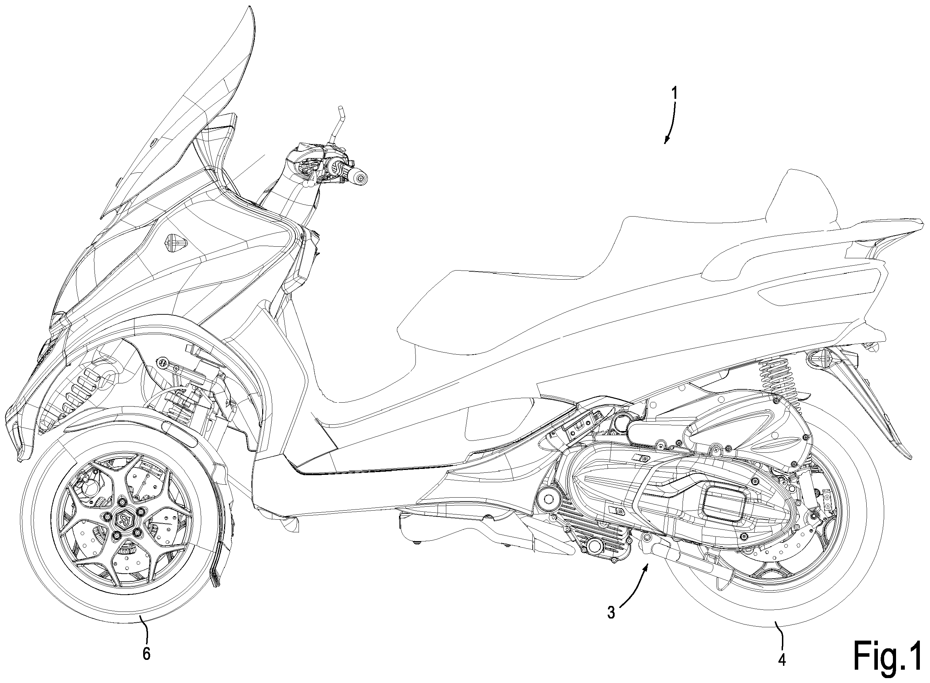

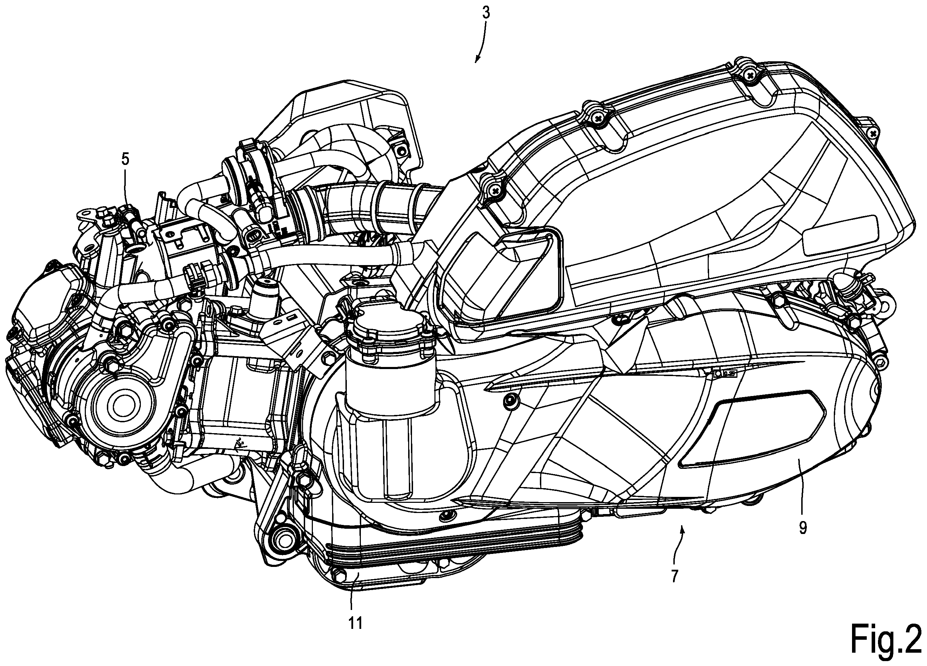

Fig. 1 schematically shows a motor vehicle 1, on which a motor-transmission unit 3 is mounted, which may comprise a continuously variable transmission (also referred to as CVT). The motor vehicle 1 has a rear drive wheel 4 actuated by the motor and one or two front steering wheels 6. Fig. 2 shows an axonometric view of the motor-transmission unit 3, wherein the motor, typically an internal combustion engine 5, is connected to a transmission indicated as a whole with the reference number 7. The transmission 7, transmitting motion from the motor 5 to the rear drive wheel 4, comprises a continuously variable transmission housed in a casing or housing 7. In a position preferably outside the housing 7 and opposite to the position of the motor 5, an actuator 11 is provided, controlling the continuously variable transmission and setting the right gear ratio. The actuator 11 can be manually or automatically controlled, according to control logics that are outside the scope of the present disclosure.

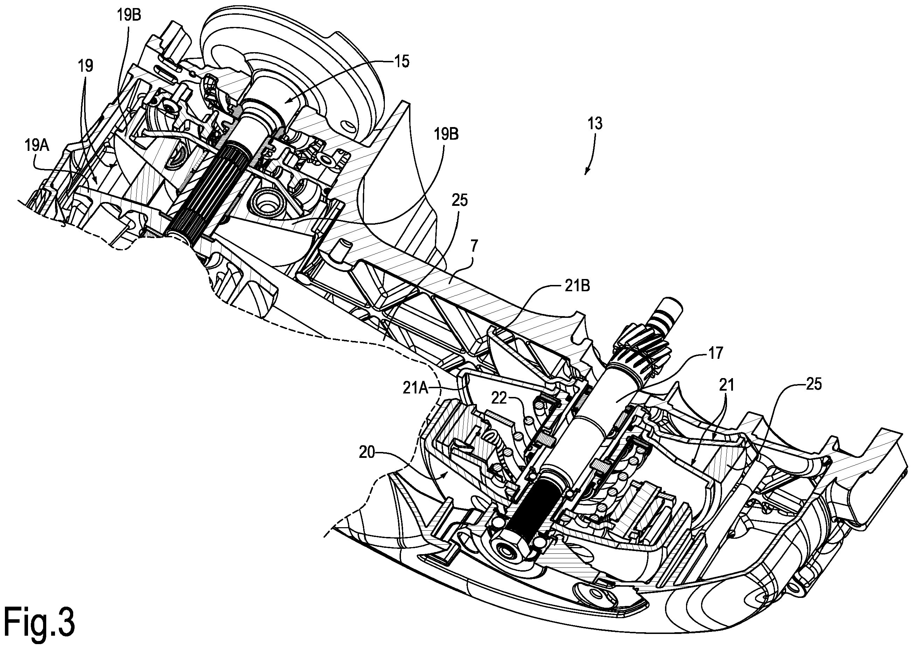

The general structure of the continuously variable transmission is shown in Fig. 3, showing an axonometric cross-section of the main components of the transmission. Below, only the components of the transmission useful for understanding the present invention will be described. The continuously variable transmission is indicated as a whole with number 13. It comprises, inside the housing 7, a drive shaft 15 and a driven shaft 17. On the drive shaft 15 a drive pulley, or primary pulley 19 is keyed, whilst to the driven shaft 17 a driven pulley or secondary pulley 21 is connected. In possible embodiments, the driven shaft 17 and the secondary pulley 21 may be connected through a slipper clutch 20. A pinion 18, keyed on the driven shaft 17 or made in a single piece therewith, transmits motion to the rear drive wheel 4 in a known manner.

The primary pulley 19 comprises a half-pulley 19A and a half-pulley 19B. Both half-pulleys 19A, 19B are keyed on the drive shaft 15 to be rotated by the drive power supplied by the motor 5. The half-pulley 19A is axially fixed relative to the drive shaft 15, while the half-pulley 19B is axially movable relative to the drive shaft 15 according to the double arrow fB. Below, the half-pulley 19A will be referred to as "fixed half-pulley", as it is axially fixed relative to the drive shaft 15. Vice versa, the half-pulley 19B will be referred to as "movable half-pulley", as it is axially movable along the drive shaft 15 so as to move towards and away from the fixed half-pulley 19A.

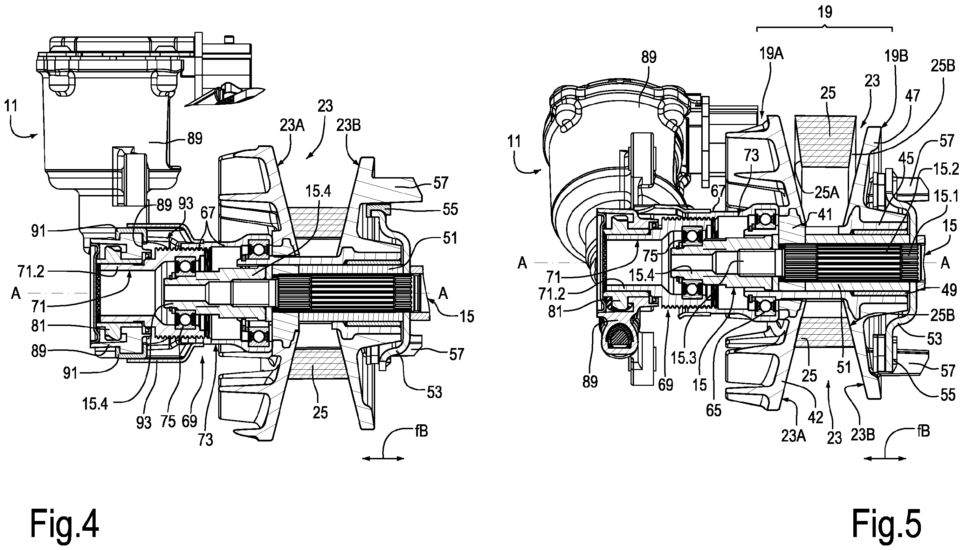

Between the two half-pulleys 19A, 19B a first groove 23 is defined, with a V-shaped cross-section, where a drive belt 25 engages. The groove 23 is delimited by the two conical surfaces 23A, 23B (see also Figs. 4 and 5) of the half-pulleys 19A, 19B. The belt 25 has two sides 25A and 25B touching the conical surfaces 23A, 23B delimiting the V-shaped groove 23. The position of the drive belt 25 inside the groove 23, and more precisely the average radius of the contact surface between belt and pulley varies when the axial dimension of the V-shaped groove 23 varies, and therefore when the reciprocal distances between the half-pulleys 19A, 19B varies.

The same configuration applies to the driven pulley or secondary pulley 21, but with the half-pulleys arranged reversely. In this way, when the movable half-pulley 19B is moved towards the fixed half-pulley 19A through the actuator 11, the drive belt 25 forces the movable half-pulley of the secondary pulley 21 to move away from the respective fixed half-pulley, thus causing a variation in the average radius of contact between secondary pulley 21 and belt 25 opposite to the variation in the average radius of contact between primary pulley 19 and belt 25.

In particular, with reference to Fig. 3, the secondary driven pulley 21 comprises a secondary half-pulley 21A and a secondary half-pulley 21B. The secondary half-pulley 21B is axially fixed relative to the rotation axis of the driven shaft 17, whilst the secondary half-pulley 21A is axially movable and is moved towards the fixed half-pulley 21B by means of a spring 22. When the belt 25 is moved due to the effect of a device acting on the movable half-pulley 19B and described in detail below, the belt 25 causes the half-pulley 21A to move relative to the half-pulley 21B. More in particular, the arrangement is such that, when the distance between the half-pulleys 19A, 19B increases, and thus the belt 25 moves towards the axis of the drive shaft 15, the distance between the half-pulleys 21A, 21B decreases, and the belt moves away from the axis of the driven shaft 17.

The operation principle briefly described above is known to those skilled in the art and does not require further explanation.

Even if in the embodiment described herein the actuator 11, acting on the continuously variable transmission, is configured to act on the primary pulley 19, in less advantageous embodiments the actuator 11 may be associated with the secondary pulley 21, i.e. with the driven pulley.

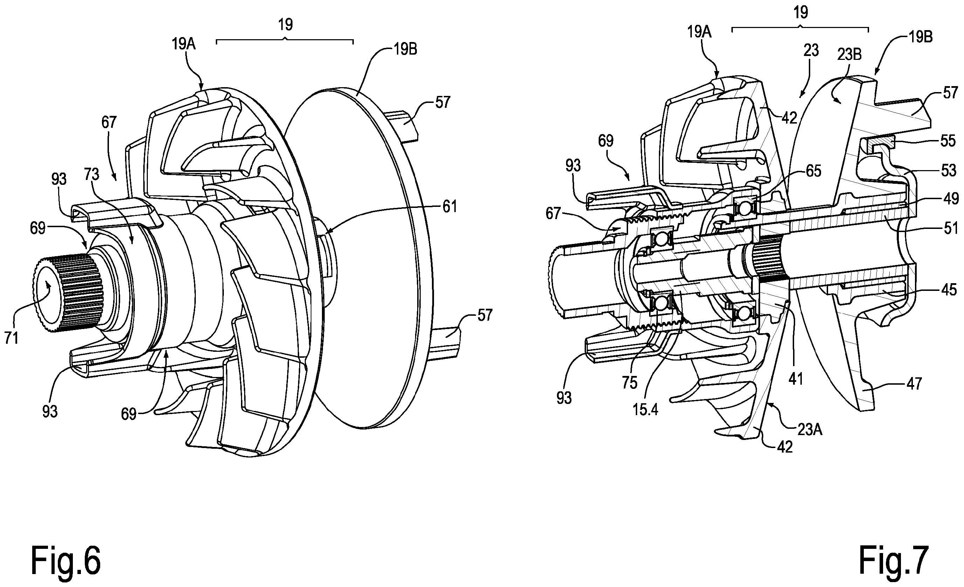

Figs. 4 to 18 show the unit formed by the primary pulley and the actuator of the continuously variable transmission and the main components thereof, separated from one another.

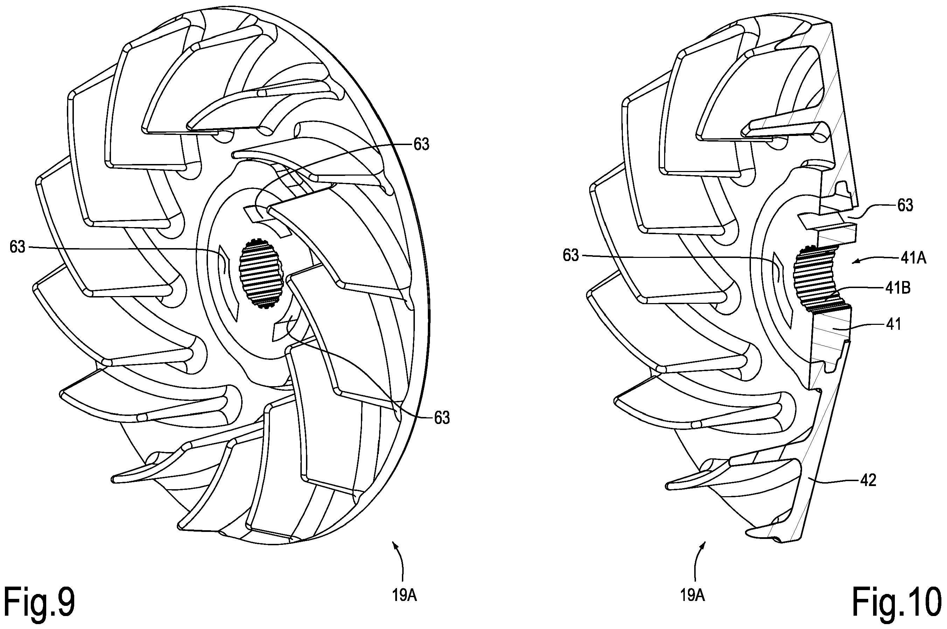

As shown in particular in Figs. 4 and 5, in the illustrated embodiment the drive shaft 15 is comprised of a first portion 15.1 with a grooved profile 15.2 and of an end 15.3 of smaller diameter. A second portion 15.4 of the drive shaft, forming an end of the drive shaft 15, is screwed onto this end 15.3. The grooved profile 15.2 of the shaft portion 15.1 forms a torsional coupling between the drive shaft 15 and the fixed half-pulley 19A. The fixed half-pulley 19A may have a core constituted by an insert 41 made of a more resistant material than the material of the remaining part 42 of the half-pulley 19A, that can be made of a less resistant and lighter material. The insert 41 may be made, for example, of steel, and the peripheral part 42 of aluminum. The two parts 41, 42 may be co-molded, i.e. formed in a single molding process. The insert 41 has greater mechanical strength and forms a through hole 41A surrounded by a grooved profile 41B (see in particular Figs. 9 and 10, where the fixed half-pulley 19A is shown alone) complementary to the grooved profile 15.2 of the drive shaft 15. The remaining peripheral part 42 requires lower mechanical strength and may be made of a lighter material to reduce the overall inertia of the half-pulley 19A. Number 43 indicates cooling fins that can be made in a single piece from the fixed half-pulley 19A.

Analogously, the movable half-pulley 19B may comprise a central core 45 made of steel or other mechanically strong material and a peripheral portion 47 made of lighter material, for example aluminum.

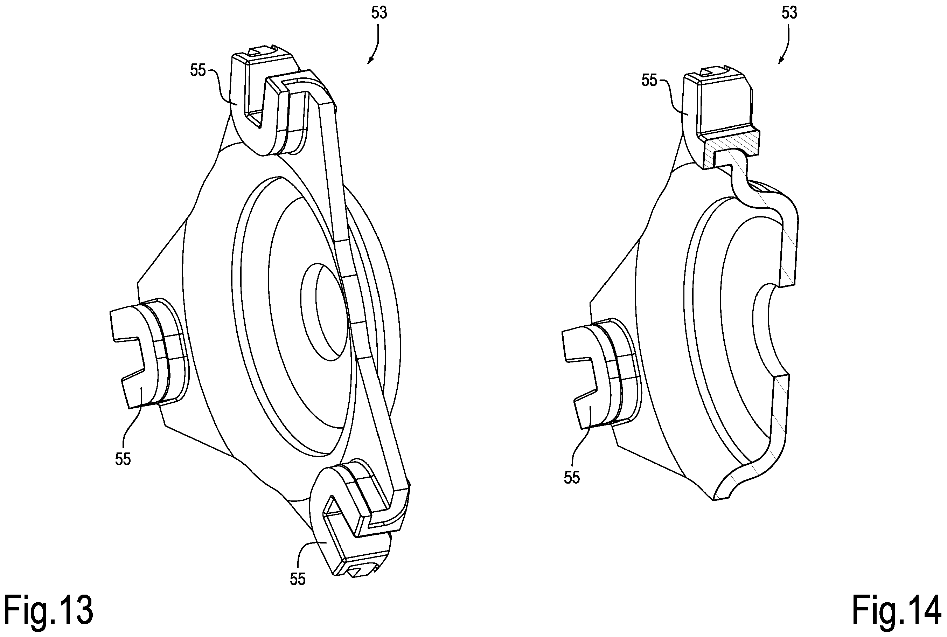

In the illustrated embodiment, the la movable half-pulley 19B is supported through a bearing 49, for example a thrust bearing, so as to translate according to the double arrow fB in axial direction, i.e. in a direction parallel to the direction of the axis A-A of the drive shaft 15. In the embodiment of Figs. 4 and 5, the bearing 49 is mounted on a spacer 51 inserted coaxially with the drive shaft 15. The spacer 51 keeps at fixed reciprocal distance the fixed half-pulley 19A and a dragging member 53 (see also Figs. 3 and 14) torsionally coupling the drive shaft 15 and the movable half-pulley 19B. The dragging member 53 has shoes 55 (in the illustrated example three shoes, but the number is a mere example), which engage in a sliding manner appendices 57 integral with the movable half-pulley 19B. The dragging member 53 may be torsionally coupled, for example through a grooved profile, not shown for the sake of simplicity of drawing, to the grooved profile 15.2 of the portion 15.1 of the drive shaft. With such a configuration, it is possible to transmit torque from the drive shaft 15 to the movable half-pulley 19B. This latter can slide in the direction fB along the axis A-A of the drive shaft 15, with the support of the bearing 49, keeping the engagement with the drive shaft 15 thanks to the coupling between shoes 55 and appendices 57.

In other embodiments, the movable half-pulley 19B may be torsionally coupled to the drive shaft 15 keeping the ability of moving axially relative thereto thanks to a grooved profiled direct connection.

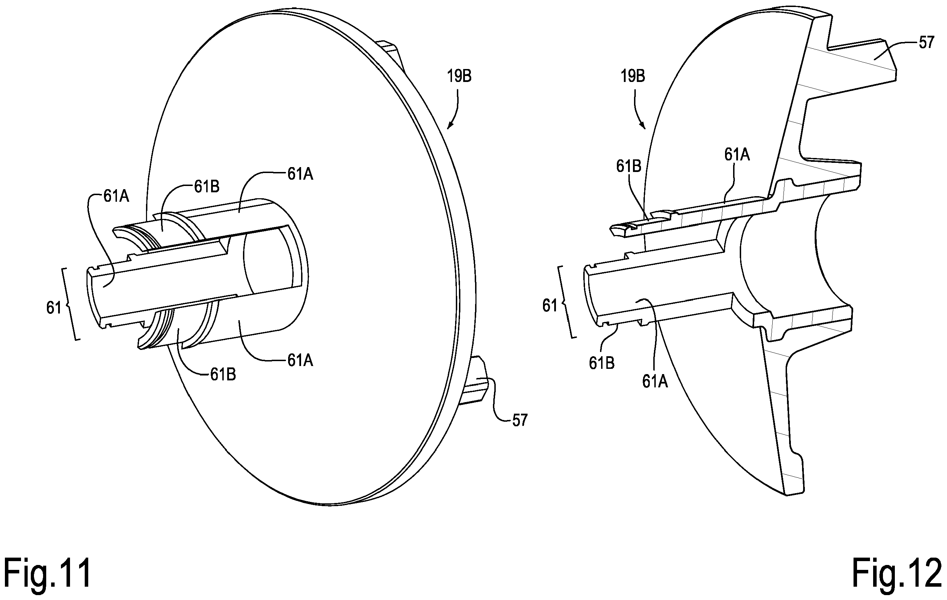

The movable half-pulley 19B has an axial body 61, projecting from the conical surface 23B towards the fixed half-pulley 19A. The axial body 61 is constituted by a plurality of appendices 61A, shown in particular in Fig. 11 and 12, where the half-pulley 19B is shown alone. In the illustrated example, the axial body 61 is subdivided into three appendices 61A, but the number of appendices may be different.

The axial body 61 extends through the fixed half-pulley 19A. To this end, the fixed half-pulley 19A has through slots 63, whose number and shape correspond to the number and shape of the appendices 61B, as shown in particular in Figs. 9 and 10.

Each appendix 61A forming the axial body 61 has, at the distal end thereof, i.e. the free end opposite to the movable half-pulley 19B, a seat 61B for a bearing 65 (see Figs. 4 and 5). A variable length member 67, forming part of a mechanical connection device 69 between the actuator 11 and the movable half-pulley 19B, is constraint to the axial body 61 through the bearing 65. The mechanical connection device 69 between the actuator 11 and the movable half-pulley 19B is adapted to translate the movable half-pulley 19B in one or the other direction according to the arrow fB controlled by the actuator 11, to vary the size of the V-shaped groove 23 of the drive pulley 19.

More in particular, the variable length member 67 lengthens and shortens under the control of the actuator 11, thus causing the movement according fB of the movable half-pulley 19B relative to the fixed half-pulley 19A.

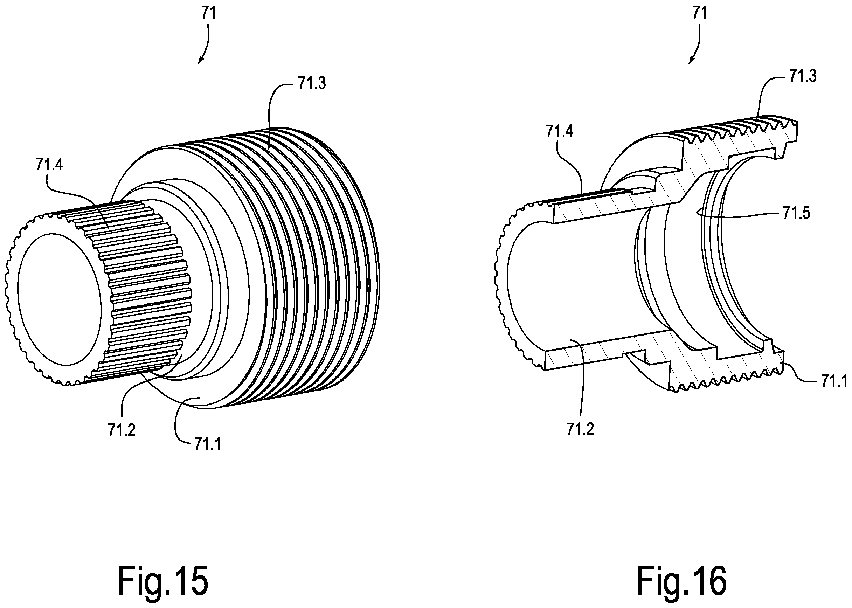

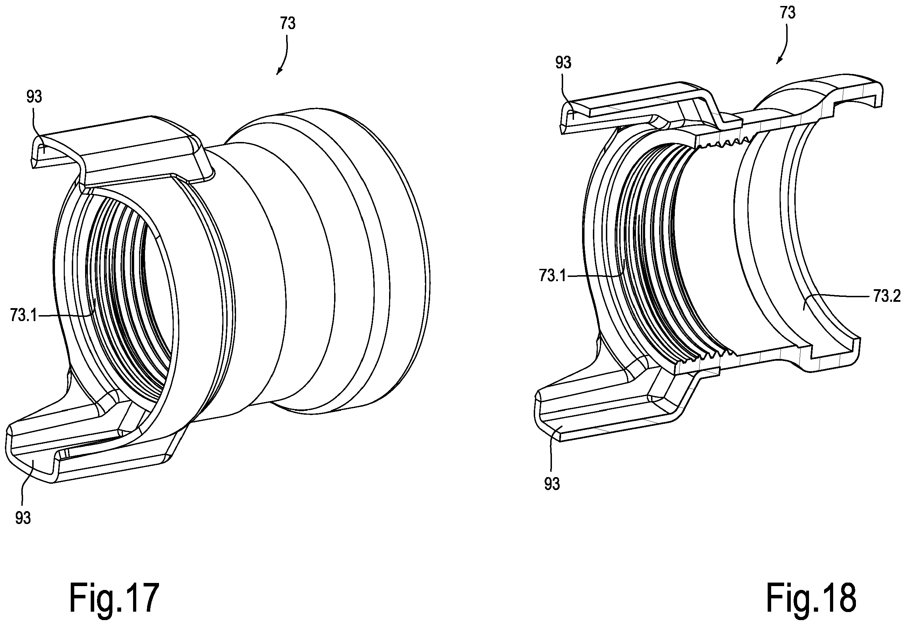

In the illustrated embodiment, the variable length member 67 comprises a first threaded member 71 and a second threaded member 73, shown in Figs. 15, 16 and in Figs. 17, 18 respectively, separated from the remaining components of the unit formed by the primary pulley 19. The two threaded members 71, 73 have an outer threading and an inner threading engaging each other so that, by rotating one of the threaded members relative to the other, the axial size of the variable length member 67 changes.

As shown in particular in Figs. 15 and 16, the first threaded member 71 has a first approximately cylindrical hollow body 71.1, and a second approximately cylindrical hollow body 71.2. On the outer surface of the first cylindrical body 71.1 an outer threading 71.3 is provided, while on the outer surface of the second cylindrical body 71.2 a grooved profile 71.4 is provided. Inside the first cylindrical body 71.1 a seat 71.5 for a bearing 75 is provided (see Figs. 4 and 5), with which the threaded member 71 is rotatably supported on the portion 15.4 of the drive shaft 15.

The second threaded member 73 (see in particular Figs. 17, 18) comprises a main body substantially shaped like a solid of revolution, with an inner threading 73.1 engaging the outer threading 71.3 of the first threaded member 71. The inner threading 73.1 is provided close to an axial end of the second threaded member 73, whilst a seat 73.2 for the bearing 65 is provided at the opposite axial end. When the threaded members 71 and 73 are screwed together, as shown in Figs. 4 and 5, they together form the variable length member 67, which is approximately shaped like a hollow shaft, coaxial with the drive shaft 15, and is supported through the bearings 65 and 75.

With this arrangement, the first threaded member 71 at least partially surrounds the drive shaft 15. In this way, the overall axial dimension of the whole device is reduced. Advantageously, as shown in Figs. 4, 5 and 16, for example, the seat 71.5 for the bearing 75 is at the level of the outer threading 71.3, i.e. the outer threading 71.3 surrounds the seat 71.5 and therefore the bearing 75. The inner threading 73.1 of the second threaded member 73 surrounds, at least partially, the bearing 75.

Thus, in the illustrated embodiment, the drive shaft 15 extends inside the first threaded member 71 and the second threaded member 73 that, coupled together, form the variable length member. The first hollow threaded member 71 is supported through the bearing 75 on the drive shaft 15, and the second hollow threaded member 73 is supported on the axial body 61 through the bearing 65 and on the drive shaft 15 through the bearing 75 with the interposition of the two threadings 73.1 and 71.3 engaging each other.

Therefore, the variable length member 67 has approximately the shape of a hollow shaft, coaxial with the drive shaft and partially surrounding said drive shaft 15. The variable length member 67 is supported by means of the bearings 65; 75 on the drive shaft 15 and on the axial body 61 integral with the movable half-pulley 19B.

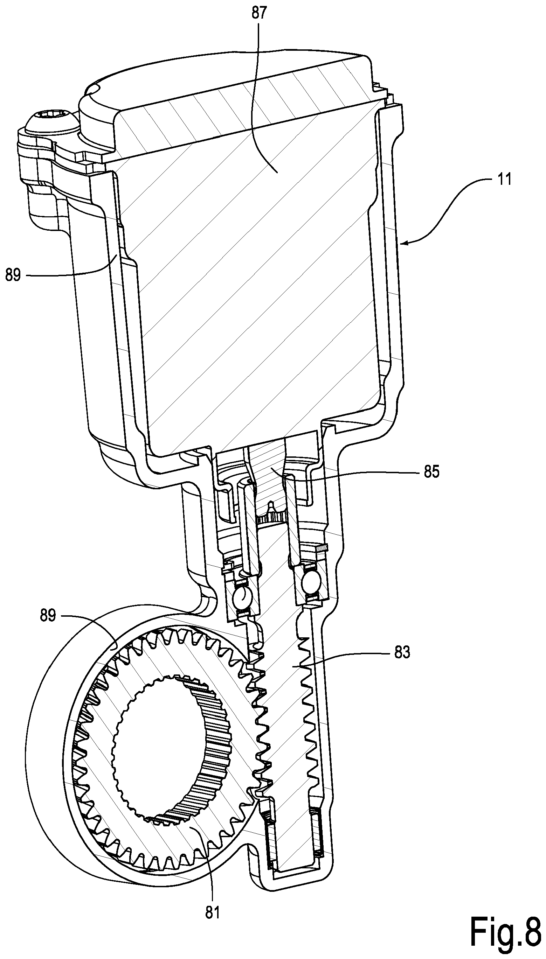

A toothed wheel 81 is torsionally coupled to the threaded member 71 through the grooved profile 71.4 of the cylindrical body 71.2 (Figs. 4, 5, 8). The toothed wheel engages a threaded bar 83 (see Fig. 8) torsionally coupled to a drive shaft 85 of an electric motor 87 forming part of, or constituting, the actuator 11.

In the illustrated embodiment, the electric motor 87, the threaded bar 83 and the toothed wheel 81 are housed in a protective shell 89 (see in particular Fig. 8), which can be rigidly fastened to the outside of the casing forming the housing 9. The protective shell 89 is therefore stationary relative to the housing 9. Shoes 91 can be integral there with, which are mechanically coupled to anti-rotation elements 93 (see in particular Figs. 4, 6, 7, 17 and 18) made in a single piece with the second threaded member 73, or rigidly fastened thereto. In this way, as the protective shell 89 and the shoes 91 are integral with the housing 9, when the electric motor 87 rotates the first threaded member 71, the second threaded member 73 is prevented from rotating.

The operation of the continuously variable transmission described above is as follows. During operation of the internal combustion engine 5 and with the motor vehicle 1 moving, the drive shaft 15 receives power from the motor 5 and transmits it to the primary pulley 19. The power is transmitted, through the drive belt 25, to the secondary pulley 21 and then to the rear drive wheel 4. Through an automatic or manual control, the gear ratio of the continuously variable transmission 13 may be varied by means of the actuator 11. The actuator receives an electric control for example from an electronic control unit, not shown, causing the rotation of the electric motor 87 in one or the other direction. The rotation of the electric motor 87 is transmitted, through the threaded bar 83 and the toothed wheel 89, to the first threaded member 71, which is free to rotate supported by the bearing 75. As the second threaded member 73 is prevented from rotating, the rotation of the threaded member 71 in one or the other direction causes the reciprocal screwing or unscrewing of the threadings 71.3 and 73.1, and consequently the shortening or lengthening of the variable length member 67 formed by the coupling of the threaded members 71 and 73. The mechanical coupling of the variable length member 67 causes the movable half-pulley 19B to move towards (in case of shortening of the variable length member 67) or away from (in case of lengthening of the variable length member 67) relative to the fixed half-pulley 19A. This translation of the movable half-pulley 19B causes a change in the gear ratio.

With the arrangement described so far it is possible easily to equip existing transmission units with an automatic transmission, as the actuator 11 can be applied to the outside of the casing or housing 9 that houses the transmission 7. Moreover, the actuator 11 may be arranged spaced from the internal combustion engine 5, in a position where it is less affected by the heat generated by the motor 5 and is therefore less subject to thermal degradation.

The described arrangement, with the mechanical connection between 11 and movable half-pulley 19B extending through the fixed half-pulley 19A allows further important advantages. For example, the thrust generated by the actuator 11 onto the movable half-pulley 19B is completely discharged inside the unit formed by the primary pulley 19 and by the mechanical connection device 69 for the connection between actuator 11 and movable half-pulley 19B. This prevents axial thrusts generated by the actuator 11 to be discharged onto the drive shaft 15, thus avoiding axial thrusts on the main bearings supporting the drive shaft.

As mentioned above, even if the actuator 11 and the related system for moving the movable half-pulley are associated with the drive pulley 19, the actuator 11 may be also associated with the driven pulley 21, even if this configuration is less advantageous.

## Claims

1. A continuously variable transmission comprising:
a housing (9);
inside the housing (9), a primary pulley (19) mounted on a drive shaft (15) and comprising a V-shaped groove (23) of variable size to house a drive belt (25);
inside the housing (9), a secondary pulley (21) mounted on a driven shaft (17) and comprising a V-shaped groove for the drive belt (25); wherein each of said primary pulley (19) and secondary pulley (21) comprises an axially fixed half-pulley (19A; 21B) and an axially movable half-pulley (19B; 21A) movable relative to the respective drive shaft (15) and driven shaft (17), to move towards and away from each other;
an actuator (11) associated with one of said primary pulley (19) and secondary pulley (21) and adapted to control the axial movement of the respective movable half-pulley (19B; 21A) with respect to the fixed half-pulley (19A; 21B);
wherein the actuator (11) is connected to the movable half-pulley (19B) by means of a mechanical connection device (69) axially extending through the fixed half-pulley (19A);
wherein the mechanical connection device (69) comprises a variable length member (67); wherein the variable length member (67) comprises a first threaded member (71) and a second threaded member (73), screwed together and coaxial with the shaft (15; 17) of the pulley (19; 21), with which the actuator (11) is associated; wherein the first threaded member (71) is adapted to be rotated by the actuator (11); wherein the rotation of the first threaded member (71) causes a change in length of the variable length member (67); wherein the second threaded member (73) is axially constraint to the movable half-pulley (19B);
wherein the first threaded member (71) has a first approximately cylindrical hollow body (71.1),
**characterized in that** a support bearing (75) is housed inside the first approximately hollow body (71.1), with which the first threaded member (71) is supported rotatable on the shaft (15; 17) of the pulley, with which the actuator (11) is associated.

2. The continuously variable transmission of claim 1, wherein the actuator (11) is arranged on a side of the fixed half-pulley (19A) that is opposite with respect to the V-shaped groove (23) and to the movable half-pulley (19B).

3. The continuously variable transmission of claim 1 or 2, wherein said actuator (11) is associated with the primary pulley (19).

4. The continuously variable transmission of claim 3, wherein: the drive shaft (15) has a first end adapted to be coupled rotationally to a power source, and a second end facing said actuator (11); wherein the fixed half-pulley (19A) is arranged along the axis (A-A) of the drive shaft (15) in a position comprised between the second end and the movable half-pulley (19B); and wherein the movable half-pulley (19B) is arranged along the axis (A-A) of the drive shaft (15) in a position comprised between the fixed half-pulley (19A) and the first end.

5. The continuously variable transmission of any one of the previous claims, wherein the actuator (11) comprises an electric motor.

6. The continuously variable transmission of any one of the previous claims, wherein the actuator (11) is applied to the outside of said housing (9).

7. The continuously variable transmission of any one of the previous claims, wherein the housing (9) comprises, on a first side, a power input associated with the drive shaft (15), and wherein the actuator is arranged on a second side of the housing (9), opposite to the first side of the housing.

8. The continuously variable transmission of claim 7, wherein the housing (9) comprises a power output associated with the driven shaft (17), said power output being arranged in the first side of the housing (9).

9. The continuously variable transmission of any one of the preceding claims, wherein the variable length member (67) is axially connected to an axial body (61) integral with the movable half-pulley (19B), the axial body (61) extending through the fixed half-pulley (19A).

10. The continuously variable transmission of claim 9, wherein the axial body (61) integral with the movable half-pulley (19B) has a distal end, opposite to the movable half-pulley (19B) and projecting from the side of the fixed half-pulley (19A) opposite to the side facing the movable half-pulley (19B) and forming an axial constraint with the variable length member (67).

11. The continuously variable transmission of claim 9 or 10, wherein the axial body (61) comprises a plurality of appendices (61A) angularly distributed around the axis (A-A) of the pulley (19) and extending through apertures of the fixed half-pulley (19A).

12. The continuously variable transmission of claim 9, 10 or 11, wherein the second threaded member (73) is supported rotatable on the axial body (61) integral with the movable half-pulley (19B).

13. The continuously variable transmission of any one of the preceding claims, , wherein the first threaded member (71) is supported (15) on an end of said shaft (15).

14. The continuously variable transmission of any one of the preceding claims, wherein the first threaded member (71) comprises a second approximately cylindrical body (71.2), coaxial with the first approximately cylindrical body (71.1).

15. The continuously variable transmission of claim 14, wherein on the outer surface of the second approximately cylindrical body (71.2) of the first threaded member (71) a grooved profile (71.4) is provided for torsionally coupling with a toothed wheel (81) actuated by the actuator (11).

16. The continuously variable transmission of any one of the preceding claims , wherein on the outer surface of the first approximately cylindrical body (71.1) of the first threaded member (71) an outer threading (71.3) is provided engaging an inner threading (73.1) of the second threaded member (73).

17. The continuously variable transmission of claim 16, wherein the inner threading (73.1) of the second threaded member (73) is provided at an axial end of the second threaded member (73), and wherein at the opposite end of said second threaded member (73) a seat (73.2) is provided for a support bearing (65), with which the second threaded member (73) is supported rotatable and axially constraint to the movable half-pulley (19B).

18. The continuously variable transmission of any one of the preceding claims, wherein the support bearing (75) housed in the first approximately cylindrical hollow body (71.1) is arranged in correspondence of the outer threading (71.3), so that the outer threading (71.3) surrounds the support bearing (75) housed in the first approximately cylindrical hollow body (71.1).

## Patentansprüche

1. Ein stufenlos verstellbares Getriebe umfassend:
ein Gehäuse (9);
innerhalb des Gehäuses (9) eine primäre Riemenscheibe (19), die auf einer Antriebswelle (15) montiert ist und eine V-förmige Rille (23) von variabler Größe umfasst, um einen Antriebsriemen (25) aufzunehmen;
innerhalb des Gehäuses (9) eine sekundäre Riemenscheibe (21), die auf einer angetriebenen Welle (17) montiert ist und eine V-förmige Rille für den Antriebsriemen (25) umfasst; wobei sowohl die primäre Riemenscheibe (19) als auch die sekundäre Riemenscheibe (21) eine axial feststehende Halbscheibe (19A; 21B) und eine axial bewegliche Halbscheibe (19B; 21A) umfasst, die relativ zu der jeweiligen Antriebswelle (15) und der angetriebenen Welle (17) beweglich sind, um sich aufeinander zu und voneinander weg zu bewegen;
einen Aktuator (11), der einer der primären Riemenscheibe (19) und der sekundären Riemenscheibe (21) zugeordnet ist und ausgebildet ist, um die axiale Bewegung der jeweiligen beweglichen Halbscheibe (19B; 21A) in Bezug auf die feste Halbscheibe (19A; 21B) zu steuern;
wobei der Aktuator 11 mit der beweglichen Halbscheibe (19B) mittels einer mechanischen Verbindungsvorrichtung (69) verbunden ist, die sich axial durch die feste Halbscheibe (19A) erstreckt;
wobei die mechanische Verbindungsvorrichtung (69) ein längenveränderliches Element (67) umfasst; wobei das längenveränderliche Element (67) ein erstes Gewindeelement (71) und ein zweites Gewindeelement (73) umfasst, die miteinander verschraubt und koaxial mit der Welle (15; 17) der Riemenscheibe (19; 21) sind, mit der der Aktuator 11 verbunden ist; wobei das erste Gewindeelement (71) ausgebildet ist, um durch den Aktuator (11) gedreht zu werden; wobei die Drehung des ersten Gewindeelements (71) eine Längenänderung des Elements (67) mit variabler Länge bewirkt; wobei das zweite Gewindeelement (73) axial an die bewegliche Halbscheibe (19B) gezwungen ist;
wobei das erste Gewindeelement (71) einen ersten annähernd zylindrischen Hohlkörper (71.1) aufweist, **dadurch gekennzeichnet, dass** im Inneren des ersten annähernd hohlen Körpers (71.1) ein Stützlager (75) aufgenommen ist, mit dem das erste Gewindeelement (71) drehbar auf der Welle (15; 17) der Riemenscheibe gelagert ist, mit der der Aktuator (11) verbunden ist.

2. Das stufenlos verstellbare Getriebe gemäß Anspruch 1, wobei der Aktuator 11 auf einer Seite der festen Halbscheibe (19A) angeordnet ist, die in Bezug auf die V-förmige Rille (23) und die bewegliche Halbscheibe (19B) entgegengesetzt ist.

3. Das stufenlos verstellbare Getriebe nach Anspruch 1 oder 2, wobei der Aktuator 11 mit der primären Riemenscheibe (19) verbunden ist.

4. Das stufenlos verstellbare Getriebe nach Anspruch 3, wobei: die Antriebswelle (15) ein erstes Ende aufweist, das ausgebildet ist, um drehbar mit einer Antriebsquelle gekoppelt zu werden, und ein zweites Ende, das dem Aktuator (11) zugewandt ist; wobei die feste Halbscheibe (19A) entlang der Achse (A-A) der Antriebswelle (15) in einer Position angeordnet ist, die zwischen dem zweiten Ende und der beweglichen Halbscheibe (19B) liegt; und wobei die bewegliche Halbscheibe (19B) entlang der Achse (A-A) der Antriebswelle (15) in einer Position angeordnet ist, die zwischen der festen Halbscheibe (19A) und dem ersten Ende liegt.

5. Das stufenlos verstellbare Getriebe nach einem der vorangehenden Ansprüche, wobei der Aktuator (11) einen Elektromotor umfasst.

6. Das stufenlos verstellbare Getriebe nach einem der vorangehenden Ansprüche, wobei der Aktuator (11) an der Außenseite des Gehäuses (9) angebracht ist.

7. Das stufenlos verstellbare Getriebe nach einem der vorangehenden Ansprüche, wobei das Gehäuse (9) auf einer ersten Seite einen der Antriebswelle (15) zugeordneten Leistungseingang umfasst und wobei der Aktuator auf einer zweiten Seite des Gehäuses (9) angeordnet ist, die der ersten Seite des Gehäuses gegenüberliegt.

8. Das stufenlos verstellbare Getriebe nach Anspruch 7, wobei das Gehäuse (9) einen der Abtriebswelle (17) zugeordneten Leistungsausgang umfasst, der in der ersten Seite des Gehäuses (9) angeordnet ist.

9. Das stufenlos verstellbare Getriebe nach einem der vorangegangenen Ansprüche, wobei das Element (67) mit variabler Länge axial mit einem Axialkörper (61) verbunden ist, der mit der beweglichen Halbscheibe (19B) einstückig ist, wobei sich der Axialkörper (61) durch die feste Halbscheibe (19A) erstreckt.

10. Das stufenlos verstellbare Getriebe nach Anspruch 9, wobei der mit der beweglichen Halbscheibe (19B) einstückige Axialkörper (61) ein distales Ende aufweist, das der beweglichen Halbscheibe (19B) gegenüberliegt und von der Seite der festen Halbscheibe (19A) absteht, die der der beweglichen Halbscheibe (19B) zugewandten Seite gegenüberliegt, und eine axiale Begrenzung mit dem Element (67) variabler Länge bildet.

11. Das stufenlos verstellbare Getriebe nach Anspruch 9 oder 10, wobei der Axialkörper (61) eine Vielzahl von Fortsätzen (61A) umfasst, die winkelmäßig um die Achse (A-A) der Riemenscheibe (19) verteilt sind und sich durch Öffnungen der festen Halbscheibe (19A) erstrecken.

12. Das stufenlos verstellbare Getriebe nach Anspruch 9, 10 oder 11, wobei das zweite Gewindeelement (73) drehbar auf dem Axialkörper (61) gelagert ist, der mit der beweglichen Halbscheibe (19B) integriert ist.

13. Das stufenlos verstellbare Getriebe nach einem der vorangegangenen Ansprüche, wobei das erste Gewindeelement (71) an einem Ende der Welle (15) gelagert ist (15).

14. Das stufenlos verstellbare Getriebe gemäß einem der vorangegangenen Ansprüche, wobei das erste Gewindeelement (71) einen zweiten annähernd zylindrischen Körper (71.2) umfasst, der koaxial zu dem ersten annähernd zylindrischen Körper (71.1) ist.

15. Das stufenlos verstellbare Getriebe nach Anspruch 14, wobei auf der Außenfläche des zweiten, annähernd zylindrischen Körpers (71.2) des ersten Gewindeelements (71) ein Rillenprofil (71.4) zur Torsionskopplung mit einem durch den Aktuator (11) betätigten Zahnrad (81) bereitgestellt ist.

16. Das stufenlos verstellbare Getriebe gemäß einem der vorangegangenen Ansprüche, wobei an der Außenfläche des ersten annähernd zylindrischen Körpers (71.1) des ersten Gewindeelements (71) ein Außengewinde (71.3) bereitgestellt ist, das in ein Innengewinde (73 .1) des zweiten Gewindeelements (73) eingreift.

17. Das stufenlos verstellbare Getriebe nach Anspruch 1, wobei das Innengewinde (73.1) des zweiten Gewindeelements (73) an einem axialen Ende des zweiten Gewindeelements (73) bereitgestellt ist, und wobei am gegenüberliegenden Ende des zweiten Gewindeelements (73) ein Sitz (73.2) für ein Stützlager (65) bereitgestellt ist, mit dem das zweite Gewindeelement (73) drehbar und axial begrenzt an der beweglichen Halbscheibe (19B) abgestützt ist.

18. Das stufenlos verstellbare Getriebe gemäß einem der vorangegangenen Ansprüche, wobei das in dem ersten annähernd zylindrischen Hohlkörper (71.1) aufgenommene Stützlager (75) in Übereinstimmung mit dem Außengewinde (71.3) angeordnet ist, sodass das Außengewinde (71.3) das in dem ersten annähernd zylindrischen Hohlkörper (71.1) aufgenommene Stützlager (75) umgibt.

## Revendications

1. Une transmission variable en continu, comprenant :
un logement (9) ;
à l'intérieur du logement (9), une poulie primaire (19) montée sur un arbre d'entraînement (15) et comprenant une gorge en forme de V (23) de taille variable pour loger une courroie d'entraînement (25) ;
à l'intérieur du logement (9), une poulie secondaire (21) montée sur un arbre entraîné (17) et comprenant une gorge en forme de V pour la courroie d'entraînement (25) ; chacune desdites poulie primaire (19) et poulie secondaire (21) comprenant une demi-poulie fixe axialement (19A; 21B) et une demi-poulie mobile axialement (19B ; 21A), mobile relativement à l'arbre d'entraînement respectif (15) et à l'arbre entraîné (17), pour les rapprocher et les éloigner l'un de l'autre ;
un organe d'actionnement (11) associé avec l'une desdites poulie primaire (19) et poulie secondaire (21) et apte à commander le mouvement axial de la demi-poulie mobile respective (19B ; 21A) par rapport à la demi-poulie fixe (19A; 21B) ;
l'organe d'actionnement (11) étant connecté à la demi-poulie mobile (19B) au moyen d'un dispositif de connexion mécanique (69) s'étendant axialement à travers la demi-poulie fixe (19A) ;
le dispositif de connexion mécanique (69) comprenant un organe de longueur variable (67) ; l'organe de longueur variable (67) comprenant un premier organe fileté (71) et un deuxième organe fileté (73), vissés l'un sur l'autre et coaxiaux avec l'arbre (15 ; 17) de la poulie (19 ; 21) avec laquelle l'organe d'actionnement (11) est associé ; le premier organe fileté (71) étant apte à être entraîné en rotation par l'organe d'actionnement (11) ; la rotation du premier organe fileté (71) provoquant un changement dans la longueur de l'organe à longueur variable (67) ; le deuxième organe fileté (73) étant axialement contraint à la demi-poulie mobile (19B) ;
le premier organe fileté (71) ayant un premier corps creux approximativement cylindrique (71.1),
**caractérisée en ce que** le palier de support (75) est logé à l'intérieur du premier corps approximativement creux (71.1), avec lequel le premier organe fileté (71) est supporté en rotation sur l'arbre (15 ; 17) de la poulie, avec laquelle l'organe d'actionnement (11) est associé.

2. La transmission variable en continu selon la revendication 1, dans laquelle l'organe d'actionnement (11) est agencé sur un côté de la demi-poulie fixe (19A) qui est à l'opposé par rapport à la gorge en forme de V (23) et à la demi-poulie mobile (19B).

3. La transmission variable en continu selon la revendication 1 ou 2, dans laquelle ledit organe d'actionnement (11) est associé avec la première poulie (19).

4. La transmission variable en continu selon la revendication 3, dans laquelle : l'arbre d'entraînement (15) a une première extrémité apte à être couplée en rotation à une source d'alimentation et une deuxième extrémité faisant face audit organe d'actionnement (11) ; la demi-poulie fixe (19A) étant agencée le long de l'axe (A-A) de l'arbre d'entraînement (15) dans une position comprise entre la deuxième extrémité et la demi-poulie mobile (19B) ; et la demi-poulie mobile (19B) étant agencée le long de l'axe (A-A) de l'arbre d'entraînement (15) dans une position comprise entre la demi-poulie fixe (19A) et la première extrémité.

5. La transmission variable en continu selon l'une quelconque des revendications précédentes, dans laquelle l'organe d'actionnement (11) comprend un moteur électrique.

6. La transmission variable en continu selon l'une quelconque des revendications précédentes, dans laquelle l'organe d'actionnement (11) est appliqué à l'extérieur dudit logement (9).

7. La transmission variable en continu selon l'une quelconque des revendications précédentes, dans laquelle le logement (9) comprend, sur un premier côté, une entrée de puissance associée avec l'arbre d'entraînement (15), et dans laquelle l'organe d'actionnement est agencé sur un deuxième côté du logement (9), à l'opposé du premier côté du logement.

8. La transmission variable en continu selon la revendication 7, dans laquelle le logement (9) comprend une sortie de puissance associée à l'arbre d'entraînement (17), ladite sortie de puissance étant agencée sur le premier côté du logement (9).

9. La transmission variable en continu selon l'une quelconque des revendications précédentes, dans laquelle l'organe à longueur variable (67) est connecté axialement à un corps axial (61) solidaire de la demi-poulie mobile (19B), le corps axial (61) s'étendant à travers la demi-poulie fixe (19A).

10. La transmission variable en continu selon la revendication 9, dans laquelle le corps axial (61) solidaire de la demi-poulie mobile (19B) a une extrémité distale, opposée à la demi-poulie mobile (19B) et faisant saillie depuis le côté de la demi-poulie fixe (19A) opposé au côté faisant face à la demi-poulie mobile (19B) et formant une contrainte axiale avec l'organe à longueur variable (67).

11. La transmission variation en continu selon la revendication 9 ou 10, dans laquelle le corps axial (61) comprend une pluralité d'appendices (61) distribués angulairement autour de l'axe (A-A) de la poulie (19) et s'étendant à travers des ouvertures de la demi-poulie fixe (19A).

12. La transmission variable en continu selon la revendication 9, 10 ou 11, dans laquelle le deuxième organe fileté (73) est supporté en rotation sur le corps axial (61) solidaire de la demi-poulie mobile (19B).

13. La transmission variable en continu selon l'une quelconque des revendications précédentes, dans laquelle le premier organe fileté (71) est supporté à une extrémité dudit arbre (15).

14. La transmission variable en continu selon l'une quelconque des revendications précédentes, dans laquelle le premier organe fileté (71) comprend un deuxième corps approximativement cylindrique (71.2), coaxial avec le premier corps approximativement cylindrique (71.1).

15. La transmission variable en continu selon la revendication 14, dans laquelle, sur la surface externe du deuxième corps approximativement cylindrique (71.2) du premier organe fileté (71), est prévu un profil rainuré (71.4) pour un couplage en torsion avec une roue dentée (81) actionnée par l'organe d'actionnement (11).

16. La transmission variable en continu selon l'une quelconque des revendications précédentes, dans laquelle, sur la surface externe du premier corps approximativement cylindrique (71.1) du premier organe fileté (71), est prévu un filetage externe (71.3) en prise avec un filetage interne (73.1) du deuxième organe fileté (73).

17. La transmission variable en continu selon la revendication 16, dans laquelle le filetage interne (73.1) du deuxième organe fileté (73) est prévu à une extrémité axiale du deuxième organe fileté (73), et dans laquelle, à l'extrémité opposée dudit deuxième organe fileté (73), un logement (73.2) est prévu pour un palier de support (65), avec lequel le deuxième organe fileté (73) est supporté en rotation et contraint axialement par la demi-poulie mobile (19B).

18. La transmission variable en continu selon l'une quelconque des revendications précédentes, dans laquelle le palier de support (75) logé dans le premier corps creux approximativement cylindrique (71.1) est agencé en correspondance du filetage externe (71.3), de sorte que le filetage externe (71.3) entoure le palier de support (75) logé dans le premier corps creux approximativement cylindrique (71.1).
